Europäisches Patentamt

European Patent Office

Office européen des brevets

(19)

(11) Veröffentlichungsnummer : **0 104 266**
**B1**

(12) **EUROPÄISCHE PATENTSCHRIFT**

(45) Veröffentlichungstag der Patentschrift :
28.05.86

(21) Anmeldenummer : **82108883.8**

(22) Anmeldetag : **25.09.82**

(51) Int. Cl.⁴ : **G 01 M   1/04**

(54) Verfahren zum Auswuchten von zapfenlosen Rotoren und Vorrichtung hierzu.

(43) Veröffentlichungstag der Anmeldung :
04.04.84 Patentblatt 84/14

(45) Bekanntmachung des Hinweises auf die Patenterteilung : 28.05.86 Patentblatt 86/22

(84) Benannte Vertragsstaaten :
CH DE FR GB IT LI SE

(56) Entgegenhaltungen :
CH-A-   542 436

(73) Patentinhaber : CARL SCHENCK AG
Landwehrstrasse 55 Postfach 40 18
D-6100 Darmstadt (DE)

(72) Erfinder : Schönfeld, Harald, Ing.-grad.
Aumühlenweg 1
D-6100 Darmstadt-Arheilgen (DE)
Erfinder : Bauer, Angelo, Dipl.-Ing.
R.-Koch-Strasse 5f
D-6101 Rossdorf (DE)

(74) Vertreter : Dallhammer, Herbert, Dipl.-Ing.
CARL SCHENCK AG Patentabteilung Postfach 4018
Landwehrstrasse 55
D-6100 Darmstadt (DE)

EP 0 104 266 B1

## Beschreibung

Die Erfindung betrifft ein Verfahren zum Auswuchten von zapfenlosen Rotoren bei dem der Rotor auf einem Zapfen angeordnet wird, gemäß dem Oberbegriff das Anspruchs 1 und eine Einrichtung zur hilfsweisen Lagerung eines solchen Rotors gemäß ohne Oberbegriff des Anspruchs 3.

Auszuwuchtende Rotationskörper ohne eigene Lagerstellen bereiten besondere Probleme hinsichtlich der erreichbaren Auswuchtgüte, weil sie keine Rotoren im eigentlichen Sinne der Auswuchttechnik sind. Nur einen wirklichen Rotor, also einen Rotor mit Zapfen, kann man in Bezug auf seine Lagerstellen genau auswuchten. Ein Schwungrad beispielsweise, das keine Zapfen und keine unmittelbaren Lager hat oder einen einzelnen Ventilator mit Bohrung kann man höchstens auf eine Auswuchtgüte bringen, die gegeben ist durch den möglichen Abstand zwischen der Drehachse auf der Auswuchthilfswelle oder Hilfsspindel und der Drehachse des Körpers, auf dem er im Betrieb befestigt ist, im Allgemeinen also nicht besser als 5 µm. Es gibt zwar ein Umschlagauswuchtverfahren mit automatischer Mittelwertbildung aus zwei um 180° versetzten Aufspannlagen. Dieses Umschlagverfahren eliminiert den Aufspannfehler auf einer Hilfswelle. Es benötigt eine in das Meßsystem eingebaute Kompensationseinrichtung und ist in Betriebsanweisungen von Auswuchtmaschinen für Einzelscheiben von Strahltriebwerken erläutert (Auswuchttechnik Band I, Springer Verlag 1977). Dieses Verfahren ist jedoch nicht geeignet, Fehler zu eliminieren, die bei Aufspannen des ausgewuchteten Rotors auf seine Betriebswelle zufolge Maßtoleranzen auftreten. Bisher werden diese Fehler hingenommen.

Aus der CH-A-542 436 ist ein Verfahren zum Auswuchten von zapfenlosen Rotoren bekannt, bei welchem der Rotor zum Auswuchten fest auf den Zapfen eines Stützkörpers aufgespannt wird. Der Stützkörper ist mittels Fluidlagerung schwenkbar in einer Lagerpfanne am Ständer der Auswuchtmaschine abgestützt. Eine Unwucht wird bei diesem Verfahren durch Neigung des Stützkörpers, auf dem der Rotor befestigt ist, angezeigt. Die Fluidlagerung des Stützkörpers am Ständer ist zur Verringerung der Reibung während des Neigungsvorganges vorgesehen. Da der auszuwuchtende Rotor auf einem Hilfszapfen bzw. einer Hilfswelle aufgespannt ist, ergeben sich wie bei dem oben geschilderten Verfahren Fehler beim Aufspannen des ausgewuchteten Rotors auf seiner Betriebswelle aufgrund von Maßtoleranzen.

Ausgehend hiervon liegt der Erfindung die Aufgabe zugrunde, ein Auswuchtverfahren für zapfenlose Rotoren und eine Einrichtung hierzu in Vorschlag zu bringen, wobei mit den Rotoren verbundene drehbare Hilfszapfen in Wegfall kommen. Diese Aufgabe wird bei einem Verfahren der genannten Art erfindungsgemäß durch die im Kennzeichen des Anspruchs 1 offenbarten Merkmale gelöst. Durch den Fluidaustritt in den Bohrungsraum treten Fehler, hervorgerufen durch Passungstoleranzen und Oberflächenungenauigkeiten des zu untersuchenden zapfenlosen Rotors nicht in Erscheinung, da derartige Formabweichungen der Werkstücksbohrung integriert werden und trotzdem eine stabile Drehachse des zu untersuchenden zapfenlosen Rotors erreicht wir. Auch wird durch das Merkmal des Fluidaustritts in axialer Richtung eine Stabilisierung in Bezug auf die am Rotationskörper vorhandenen Ausgleichsebenen erreicht, ohne daß zusätzliche Hilfsmaßnahmen ergriffen werden müssen.

Durch die im Kennzeichen des Anspruchs 2 offenbarten Merkmale wird eine wohldefinierte Erzeugung eines Stützpolsters unter Schutz gestellt.

Die erfinderische Ausgestaltung einer Hilfslagerung und eines Antriebs für das Auswuchten von Rotationskörpern ohne eigene Lagerzapfen auf einer Auswuchtmaschine geschient bei einer Einrichtung der genannten Art gemäß den kennzeichnenden Merkmalen des Anspruchs 3. Die Öffnungen des Zapfens können hierbei sowohl vorsätzlich gebohrte Löcher sein, oder es kann der gesamte Zapfen im Bereich der Lagerung für einen Rotationskörper ohne eigenen Lagerzapfen aus porösem Material bestehen. Hierdurch ist es ebenfalls möglich, daß Fluid in den Bereich zwischen Zapfenaußenseite und Bohrungsinnenseite des zu untersuchenden Rotationskörpers einströmen kann. Entsprechend der Gestalt und dem Gewicht des zu untersuchenden Rotationskörpers ohne Zapfen und in Abhängigkeit des verwendeten Fluids, bei dem es sich um gasförmige oder flüssige Fluide wie Pressluft, Wasser oder Öl handeln kann, ist der Durchsatz durch den Spalt zu bestimmen.

Die kennzeichnenden Merkmale des Anspruchs 4 zeigen eine Ausgestaltung des Erfindungsgegenstandes mit dem zapfenlose Rotationskörper, die Anlaufbunde innerhalb der Bohrung tragen, stabil gelagert ausgewuchtet werden können.

Das Kennzeichen des Anspruchs 5 erteilt die Lehre, wie eine orthogonal zur Schaftachse des Zapfens angeordnete Platte eine reproduzierbare Lagerebene und daraus folgend reproduzierbare Ausgleichsebenen am zapfenlosen Rotationskörper schafft.

Die kennzeichnenden Merkmale des Anspruchs 6 erteilen die Lehre, wie ohne zusätzlichen Fremdantrieb die erfindungsgemäße Hilfslagerung selbst als Antriebsmittel für den zu untersuchenden Rotor dient.

In Anspruch 7 wird eine Ausgestaltung des Antriebs dahingehend unter Schutz gestellt, daß auch von der Vertikalen abweichende Zapfen — richtungen eine stabile Lagerung und einen reproduzierbaren Lagerabstand ermöglichen.

Der Anspruch 8 offenbart eine besonders geeignete Ausgestaltung bei horizontalem Zapfen und das Kennzeichen des Anspruchs 9, lehrt, wie eine Steigerung der Übertragung der durch das Fluid hervorgerufenen Antriebskräfte auf den zu untersuchenden Rotationskörper erreicht wird.

Die kennzeichnenden Merkmale des Anspruchs 10 zeigen Wege auf, wie auch schwere zapfenlose Rotationskörper einer reproduzierbaren Auswuchtung mit hoher Auswuchtgüte zugeführt werden können. Durch die kennzeichnenden Merkmale des Anspruchs 11 wird gelehrt, wie eine Endfläche des zu untersuchenden Rotationskörpers mit zum Antrieb für den Rotationskörper herangezogen wird und Anspruch 12 gibt Mittel an, wie im Bereich einer Endfläche eines zu untersuchenden Rotationskörpers das stabilisierende und antreibende Fluid weggeführt werden kann.

Die kennzeichnenden Merkmale des Anspruchs 13 und die kennzeichnenden Merkmale des Anspruchs 14 zeigen Wege auf, insbesondere im Hinblick für den stabilen Aufbau eines Stützpolsters zwischen zu untersuchendem Rotationskörper und hierzu orthogonal verlaufender am Zapfen angeordneter Platte.

Der Erfindungsgegenstand offenbart somit erstmals auf dem Auswuchtmaschinengebiet die Möglichkeit, mittels fluidischer Lagerung und gleichzeitigem fluidischen Antrieb eine reproduzierbare Auswuchtung von zapfenlosen Rotationskörpern mit einer bisher nicht möglichen Auswuchtgüte vorzunehmen, ohne daß an der Hilfslagerung und am Antrieb Verschleiß auftreten. Durch Verwenden der erfindungsgemäßen Hilfslagerung wird auch eine Automatisierung des Vorganges Ein- und Auslagerung eines zapfenlosen Rotationskörpers in eine Auswuchtmaschine erheblich erleichtert, da zufolge erfindungsgemäßem Zapfen mit Austrittsöffnungen für Fluide der Spaltabstand zwischen Zapfenoberfläche und Bohrungsinnendurchmesser so gewählt werden kann, daß eine Beschädigung auch geschliffener Bohrungen zapfenloser Rotationskörper vermieden wird. Die bisher verwendeten Hilfslagerungen mit starren oder expandierenden Spanndornen lieferten, wie eingangs zum Stand der Technik erläutert, entweder nicht ausreichend reproduzierbare Meßergebnisse oder riefen Beschädigungen an den Bohrungen der zu untersuchenden Rotationskörper hervor, wenn eine automatische Beschickung derartiger Auswuchtmaschinen durchgeführt wurde, darüber hinaus war bisher, wie eingangs bereits erläutert, eine hohe Auswuchtgüte bei derartigen bekannten Auswuchtverfahren nicht möglich.

In der nachfolgenden Zeichnung wird die Erfindung näher erläutert.

Es zeigen :

Figur 1 in schematischer Darstellung eine Auswuchtmaschine mit einer erfindungsgemäßen Hilfslagerung in Ansicht

Figur 1a einen Schnitt durch eine Nebenbohrung

Figur 1b einen Schnitt durch einen Zapfen in einer Radialebene

Figur 2 eine Draufsicht auf die Anordnung nach Fig. 1 mit geschnittenem Zapfen und alternativen Antrieb für den Rotationskörper und

Figur 3 eine weitere Ausgestaltung eines Zapfens für eine Hilfslagerung in horizontaler Anordnung.

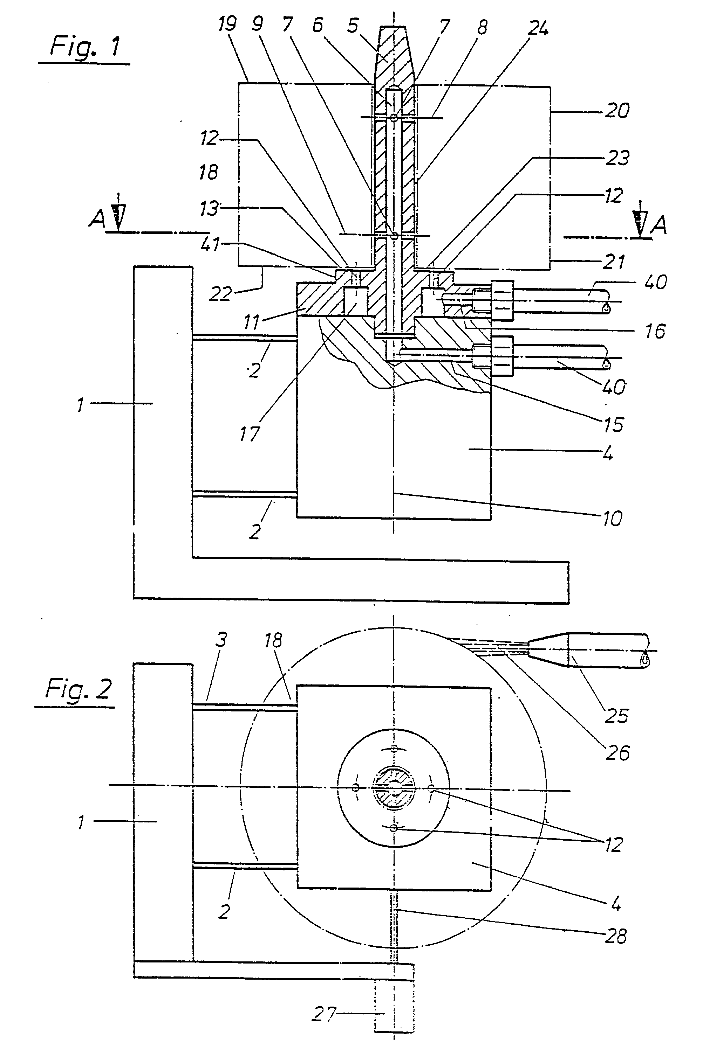

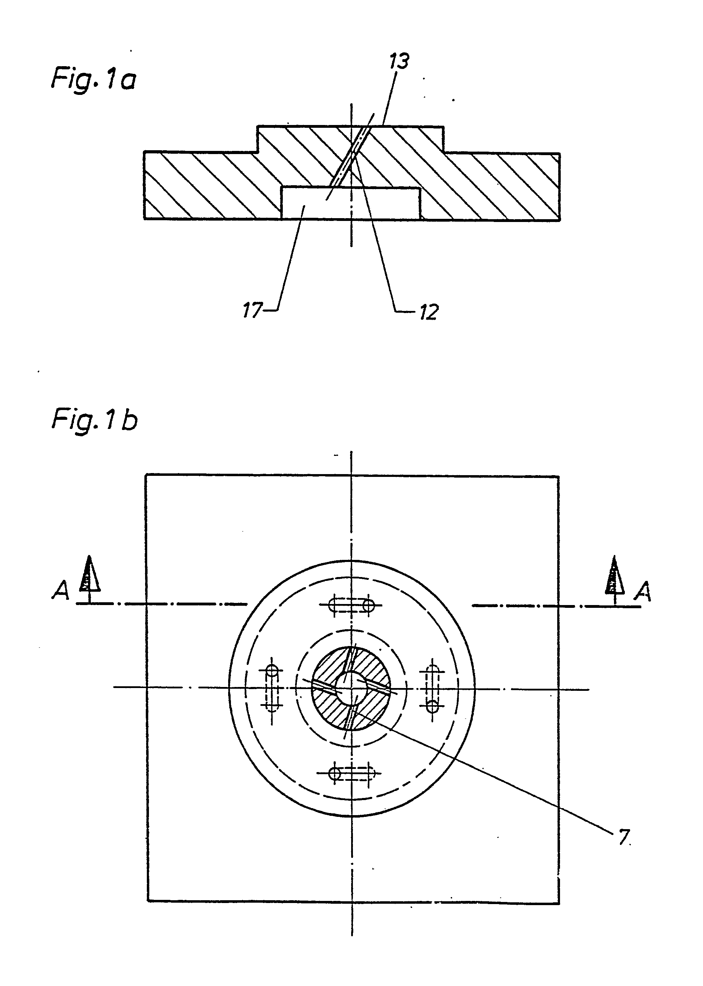

In den Figuren 1 bis 3 auftretende gleiche Bauelemente werden mit denselben Bezugszeichen bezeichnet.

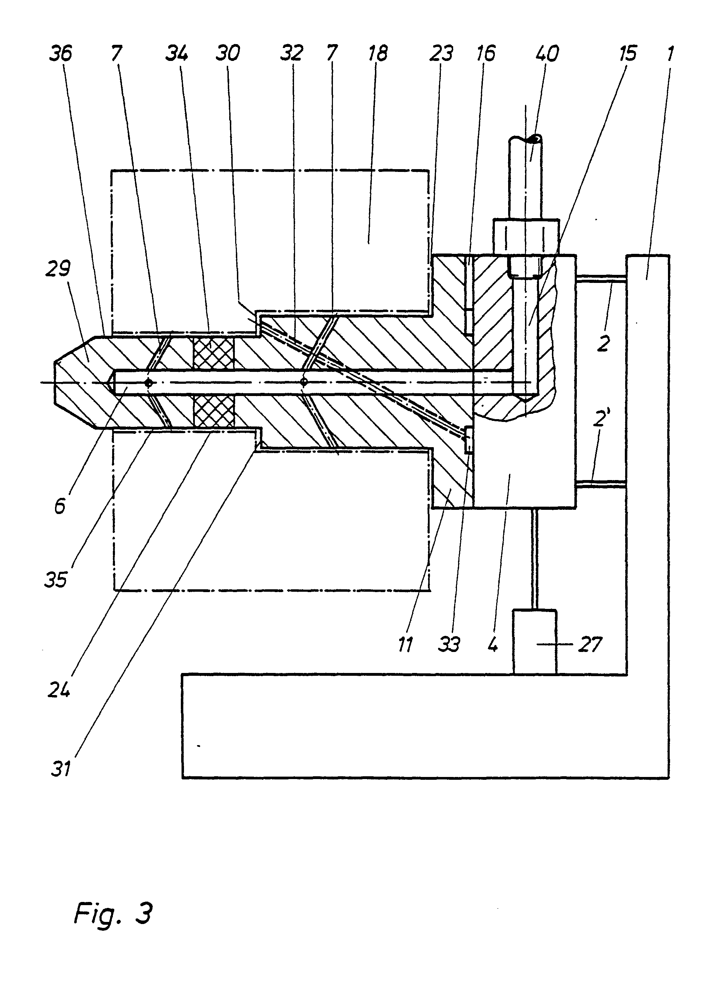

In einer schematisch dargestellten Auswuchtmaschine 1 wird im vorliegenden Fall über vier Stützfedern 2, 2', 3, 3' (vgl. auch Fig. 2) eine Schwingbrücke 4 abgestützt. Die Schwingbrücke 4 trägt einen Zapfen 5, der im Ausführungsbeispiel gemäß Fig. 1 vertikal angeordnet ist und eine zentrale Axialbohrung 6 besitzt. In mehreren Radialebenen 8, 9 verlaufen mehrere Bohrungen 7.

In einer orthogonal zur Schaftachse 10 des Zapfens 5 sich erstreckenden Platte 11 sind Nebenbohrungen 12 angeordnet, die an einer Oberfläche 13 der Platte 11 enden. Die im Ausführungsbeispiel dargestellte Platte 11 besitzt einen Bund 41, der gekrümmte sich nach außen erstreckende Kanäle besitzt. Durch Zuführungskanäle 15, 16 werden die zentrale Axialbohrung 6 und die Nebenbohrungen 12 versorgt. Im Ausführungsbeispiel sind vier Nebenbohrungen 12 vorgesehen, die über eine Ringleitung 17 mit Fluiden 40 versorgt werden. Im Ausführungsbeispiel wird als Lagerungs- und Antriebsfluid Luft benutzt und durch die getrennte Anordnung der Kanäle für die zentrale Axialbohrung 6 und die Nebenbohrungen 12 ist ein wohldosiertes Variieren der zuzugebenden Luftmenge dergestalt möglich, daß in Abhängigkeit eines zu untersuchenden zapfenlosen Rotationskörpers 18 sowohl eine stabile Umlaufachse für diesen zapfenlosen Rotationskörper 18 gebildet wird, als auch eine stabile Lagerung in Axialrichtung bewirkt wird, so daß auf Grund der stabilen Lagerung in Axialrichtung in Abhängigkeit von einem Endquerschnitt 19 des zapfenlosen Rotationskörpers 18 reproduzierbare Ausgleichsebenen 20, 21 am zapfenlosen Rotationskörper 18 bestimmt werden können.

In Fig. 1a ist ein Schnitt durch eine Nebenbohrung 12 dargestellt, wobei in diesem Falle die Bohrung windschief von dem Ringkanal 17 zur Oberfläche 13 der Platte 11 verläuft. Hierdurch wird auf den anderen Endquerschnitt 22 des zapfenlosen Rotationskörpers 18 ein Antriebsimpuls ausgeübt, so daß sich dieser auf dem durch das Ausströmen gebildeten Luftstützpolster 23 rotierend bewegt.

In derselben Weise können die gemäß Fig. 1b schräg verlaufenden Bohrungen 7 einen Drehimpuls an der Bohrungsinnenseite 24 des Rotationskörpers 18 bewirken. Damit wird erreicht, daß ohne zusätzlichen Antrieb außer der Stütz- und Zentrierwirkung das Fluid 40 gleichzeitig den Antrieb für den zu untersuchenden Rotationskörper 18 übernimmt. Auf Grund dieser Wirkungsweise besitzt eine derart erfindungsgemäß ausgestattete Auswuchtmaschine 1 mit Schwingbrücke 4 keinerlei drehende Teile außer dem selbst rotierenden Rotationskörper 18. Damit werden auch ein Großteil von Störfrequenzen für die Unwuchtmessung, die durch drehende Hilfsaggregate an der Auswuchtmaschine hervorgerufen werden, eindeutig vermieden.

In Fig. 2 ist schematisch eine alternative Antriebsmöglichkeit für den Rotationskörper 18, der strichpunktiert dargestellt ist, eingesetzt. Hier wirkt eine Luftdüse 25 mittels ihres Luftstroms 26, der tangential den Rotationskörper berührt, antreibend. Dieses Ausführungsbeispiel zeigt ebenfalls, daß bei diesem alternativen Hilfsantrieb kein rotierendes Bauteil verwendet wird, welches zu zusätzlichen Störfrequenzen bei der Unwuchtmessung führen kann.

Die Anwendungen des Eigenantriebs oder eines Fremdantriebs sind mit abhängig von der Beschaffenheit der Oberfläche des Rotationskörpers 18. Beide Antriebe lassen sich für eine konstante Antriebsdrehzahl des Rotationskörpers einsetzen.

In Fig. 2 ist darüber hinaus noch ein Schwingungsumformer 27 dargestellt, der über eine Taststange 28, die durch die Unwucht des Rotationskörpers 18 hervorgerufenen Schwingungen der Schwingbrücke 4 mißt und diese Schwingungen zusammen mit den Informationen über die Drehzahl, die Phasenlage und den Informationen über die Ausgleichsebenen 20 und 21 in einer nicht dargestellten Recheneinrichtung verwertet, so daß am Ende die Unwucht des Rotationskörpers 18 nach Lage und Größe vorliegt und in einem weiteren Arbeitsgang am Rotationskörper 18 ausgeglichen werden kann. Wenn es sich hierbei um einen Mehrebenenausgleich handelt, ist anstelle des einen Schwingungsumformers 27 ein zweiter Schwingungsumformer erforderlich.

Wie Fig. 3 zeigt, ist die Hilfslagerung nicht eingeschränkt auf eine vertikale Anordnung, sondern es können ebenfalls horizontale Anordnungen mit dieser Hilfslagerung ausgestattet werden.

In Fig. 3 ist ein gestufter Zapfen 29 dargestellt, der ebenfalls eine axiale Zentralbohrung 6 besitzt und von dem in verschiedenen Radialebenen Bohrungen 7 abzweigen, die in Richtung auf die Platte 11 im Spalt 35 austreten. In diesem Ausführungsbeispiel ist auch dargestellt, daß im Falle eines gestuften Zapfens 29 eine Schulter 30 der Bohrungsinnenseite 24 des Rotationskörpers 18 in Verbindung mit einem Bund 31 des gestuften Zapfens 29 in Verbindung mit windschief verlaufenden weiteren Nebenbohrungen 32, die ebenfalls mit Fluid 40 versorgt werden, zur reproduzierbaren Abstützung und zum Antrieb des Rotationskörpers 18 verwendet werden. Die weiteren Nebenbohrungen 32 enden in einem weiteren Ringkanal 33, der gegebenenfalls über eine gesonderte Zuführungsleitung mit Fluid 40 versorgbar ist.

Die durch den Rotationskörper 18 hervorgerufenen Schwingungen werden hier durch den Schwingungsumformer 27, der sich ebenfalls an der Auswuchtmaschine 1 abstützt, aufgenommen. Für die Bestimmung der Unwuchtkräfte in mehreren Ebenen gilt das oben zu Fig. 2 bereits gesagte.

Darüber hinaus ist in Fig. 3 dargestellt, wie durch den Einsatz poröser Teile 34 im gestuften Zapfen 29 oder im Zapfen 5 (vgl. Fig. 1) eine gleichförmige Verteilung des Fluids im Spalt 35 zwischen Bohrungsinnenseite 24 und Zapfenaußenseite 36 bewirkt werden kann. Handelt es sich um zu untersuchende Bauteile, die durch punktuellen Angriff von Stütz- und Antriebsfluid leicht zerstört werden können, kann anstelle des porösen Teils 34 der gesamte gestufte Zapfen 29 oder der Zapfen 5 im Bereich der Lagerung für den auszuwuchtenden Rotationskörper 18 aus porösem Material bestehen.

Die in verschiedenen Ausführungsbeispielen vorgestellte Schwingbrücke 4 mit Zapfen 5 bzw. Zapfen 29 in Verbindung mit einer Auswuchtmaschine 1 kann mit allen Meßverfahren zur Bestimmung der Unwucht nach Lage und Größe betrieben werden und ist auch nicht eingeschränkt auf die Verwendung einer bestimmten Gattung von Schwingungsumformern. So können Geschwindigkeitsaufnehmer, Kraftaufnehmer, Beschleunigungsaufnehmer und auch berührungslos wirkende Schwingungsumformer benutzt werden.

Ebenso ist die Erfindung nicht eingeschränkt auf eine sogenannte überkritische Abstützung der Schwingbrücke gegen die Auswuchtmaschine, sondern es kann in derselben Weise auch eine unterkristisch abgestimmte Schwingbrücke benutzt werden.

Auch ist dieses Verfahren und die Schwingbrücke 4 mit Zapfen 5 bzw. 29 nicht eingeschränkt auf eine bestimmte Art von zapfenlosen Rotoren. So können beispielsweise Turbinenräder, Verdichterräder, Schwungräder und Kraftfahrzeugräder untersucht werden.

**Patentansprüche**

1. Verfahren zum Auswuchten von zapfenlosen Rotoren (18), bei dem der Rotor (18) auf einem Zapfen (5, 29) einer Auswuchtmaschine (1) angeordnet und in axialer Richtung abgestützt wird, dadurch gekennzeichnet, daß Fluid zwischen die Außenoberfläche des Zapfens (5, 29) und die gegenüberliegende Oberfläche des Rotors (18) eingebracht und der Rotor (18) dadurch zentriert gelagert wird, daß der Rotor (18) zu Drehbewegungen angetrieben wird, und daß zur Bestimmung der Unwucht zufolge der Unwucht auftretende Schwingungen des Zapfens (5, 29) herangezogen werden.

2. Verfahren nach Anspruch 1, dadurch gekennzeichnet, daß in im wesentlichen axialer Richtung strömendes Fluid beim Austritt an einer der einander gegenüberliegenden Stirnflächen (13, 22 bzw. 30, 31) von Rotor (18) und Zapfen (5, 29) für die axiale Abstützung zwischen diesen in radialer Richtung umgelenkt wird.

3. Einrichtung zum hilfsweisen Lagern eines zapfenlosen, eine Bohrung für die spätere Aufnahme eines Lagerzapfens aufweisenden Rotors (18) auf einem Zapfen (5, 29) einer Auswuchtmaschine (1), dadurch gekennzeichnet, daß der Zapfen (5, 29) Öffnungen für den Durchtritt von Fluid (40) in den Bereich zwischen Zapfen (5, 29) und Bohrungsinnenseite (24) aufweist, und daß die Öffnungen des Zapfens (5, 29) über Zuführungskanäle (15, 16) mit einem Fluidvorrat verbunden sind.

4. Einrichtung nach Anspruch 3, dadurch gekennzeichnet, daß der Zapfen (5, 29) über seine Länge verschiedene Durchmesser aufweist.

5. Einrichtung nach Anspruch 3 und/oder 4, dadurch gekennzeichnet, daß der Zapfen (5, 29) an seinem einen Ende eine orthogonal zu seiner Schaftachse (10) verlaufende Platte (11) trägt, deren Durchmesser größer als der größte Zapfendurchmesser ist.

6. Einrichtung nach einem oder mehreren der vorhergehenden Ansprüche, dadurch gekennzeichnet, daß innerhalb des Zapfens (5, 29) mindestens eine zentrale Axialbohrung (6) vorgesehen ist, und daß innerhalb des Zapfens (5, 29) im Bereich der Bohrungsinnenseite (24) des zu untersuchenden Rotors (18) mehrere Bohrungen (7) im wesentlichen orthogonal zur Schaftachse (10) des Zapfens (5, 29) vorgesehen sind, und daß die Austrittsöffnungen der im wesentlichen orthogonalen Bohrungen (7) mit der Zapfenoberfläche in Radialebenen (8, 9) einen von 90° abweichenden Austrittswinkel besitzen.

7. Einrichtung nach Anspruch 6, dadurch gekennzeichnet, daß die Bohrungen (7) einen Winkel mit der jeweiligen Radialebene (8, 9) einschließen.

8. Einrichtung nach Anspruch 7, dadurch gekennzeichnet, daß bei horizontaler Anordnung des Zapfens (5, 29) mindestens einige der Bohrungen (7) mit ihren Austrittsöffnungen in Richtung auf die Platte (11) zu geneigt sind.

9. Einrichtung nach Anspruch 6 und/oder 7, dadurch gekennzeichnet, daß die Bohrungen gekrümmt sind.

10. Einrichtung nach einem oder mehreren der vorhergehenden Ansprüche, dadurch gekennzeichnet, daß mehrere im wesentlichen axial verlaufende Nebenbohrungen (32) im Zapfen (5, 29) angeordnet sind.

11. Einrichtung nach Anspruch 10, dadurch gekennzeichnet, daß die Nebenbohrungen (32) auf einem Kreis um die Schaftachse (10) des Zapfens (5, 29) angeordnet sind, und daß die Nebenbohrungen (32) windschief zur Schaftachse (10) verlaufen.

12. Einrichtung nach Anspruch 10, dadurch gekennzeichnet, daß die Austrittsöffnungen der Nebenbohrungen (32) in einer Radialebene mit radial verlaufenden Kanälen verbunden sind.

13. Einrichtung nach einem oder mehreren der vorhergehenden Ansprüche, dadurch gekennzeichnet, daß die Platte (11) im Bereich des Durchmessers des zu untersuchenden Rotors (18) gekrümmte Kanäle besitzt.

14. Einrichtung nach Anspruch 13, dadurch gekennzeichnet, daß die Platte (11) einen Bund (41) zur Aufnahme der gekrümmten Kanäle trägt.

**Claims**

1. A method of balancing pivotless rotors (18) wherein the rotor. (18) is disposed on a pivot (5, 29) of a balancing machine (1) and is supported in the axial direction, characterised in that fluid is introduced between the outer surface of the pivot (5, 29) and the opposite surface of the rotor (18) and the rotor (18) is thereby mounted in a centred manner, that the rotor (18) is caused to rotate and that oscillations of the pivot (5, 29) occuring as a result of the imbalance are used to determine the imbalance.

2. A method as claimed in Claim 1, characterised in that fluid flowing substantially in the axial direction, upon emerging at one of the opposed end faces (13, 22 or 30, 31) of rotor (18) and pivot (5, 29), is deflected between these in the radial direction for the axial support.

3. A device for the auxiliary mounting of a pivotless rotor (18), which comprises a bore to subsequently receive a pivot pin, on a pivot (5, 29) of a balancing machine (1), characterised in that the pivot (5, 29) comprises apertures for the passage of fluide (40) into the region between pivot (5, 29) and inside (24) of the bore, and that the apertures in the pivot (5, 29) are connected to a supply of fluid through supply channels (15, 16).

4. A device as claimed in Claim 3, characterised in that the pivot (5, 29) has different diameters over its length.

5. A device as claimed in Claim 3 and/or 4, characterised in that the pivot (5, 29) carries, at one end, a plate (11) which extends orthogonally to the pivotal axis (10) and the diameter of which is greater than the largest diameter of the pivot.

6. A device as claimed in one or more of the preceding Claims, characterised in that at least one central axial bore (6) is provided inside the pivot (5, 29), and that a plurality of bores (7) which are substantially orthogonal to the pivotal axis (10) of the pivot (5, 29) are provided inside the pivot (5, 29) in the region of the inside (24) of the bore of the rotor (18) to be tested, and that the outlets of the substantially orthogonal bores (7) form, in radial planes (8, 9), an angle of emergence with the surface of the pivot differing from 90°.

7. A device as claimed in Claim 6, characterised in that the bores (7) form an angle with the respective radial plane (8, 9).

8. A device as claimed in Claim 7, characterised in that, with the pivot (5, 29) arranged horizontally, at least some of the bores (7) are inclined with their outlets in the direction of the plate (11).

9. A device as claimed in Claim 6 and/or 7, characterised in that the bores are curvilinear.

10. A device as claimed in one or more of the preceding Claims, characterised in that a plurality of subsidiary bores (32) extending substantially axially are provided in the pivot (5, 29).

11. A device as claimed in Claim 10, characterised in that the subsidiary bores (32) are arranged in a circle round the pivotal axis (10) of the pivot and that the subsidiary bores (32) extend askew in relation to the pivotal axis (10).

12. A device as claimed in Claim 10, characterised in that the outlets of the subsidiary bores (32) are connected, in a radial plane, to passages extending radially.

13. A device as claimed in one or more of the preceding Claims, characterised in that the plate (11) has curvilinear channels in the region of the diameter of the rotor (18) to be tested.

14. A device as claimed in Claim 13, characterised in that the plate (11) carries a shoulder (41) to accomodate the curvilinear channels.

## Revendications

1. Méthode d'équilibrage de rotors sans pivot (18) pour laquelle le rotor (18) est placé sur un pivot (5, 29) d'une machine à équilibrer (1) et soutenu en direction axiale, caractérisée en ce que un fluide est introduit entre la surface extérieure du pivot (5, 29) et la surface opposée du rotor (18) ce qui permet de centrer le rotor (18) en ce que le rotor (18) est entrainé en rotation, et en ce que les oscillations du pivot (5, 29) dues au balourd, sont utilisées pour déterminer le défaut d'équilibrage.

2. Méthode selon la revendication 1, caractérisée en ce que le fluide s'écoulant essentiellement en direction axiale, est dévié en direction radiale, à sa sortie de l'une des surfaces terminales opposées (13, 22 ou 30, 31) du rotor (18) et du pivot (5, 29) pour le support axial.

3. Dispositif destiné à mettre en place de manière auxiliaire, sur le pivot (5, 29) d'une machine à équilibrer (1), un rotor (18) sans pivot, présentant un perçage destiné à recevoir ultérieurement un pivot, caractérisé en ce que le pivot (5, 29) présente des ouvertures pour le passage d'un fluide (40) dans la zone comprise entre le pivot (5, 29) et la face intérieure du perçage (24) et en ce que les ouvertures du pivot (5, 29) sont reliées par des canaux d'alimentation (15, 16) pour être alimentés en fluide.

4. Dispositif selon la revendication 3, caractérisé en ce que le pivot (5, 29) présente différents diamètres sur sa longueur.

5. Dispositif selon la revendication 3 et/ou 4, caractérisé en ce que le pivot (5, 29) supporte à l'une de ses extrémités un plateau (11) orthogonal à son axe (10), dont le diamètre est supérieur au grand diamètre du pivot.

6. Dispositif selon l'une ou plusieurs des revendications précédentes, caractérisé en ce qu'il est prévu à l'intérieur du pivot (5, 29) au moins un perçage axial central (6) et en ce qu'il est prévu à l'intérieur du pivot (5, 29) plusieurs perçages (7) essentiellement orthogonaux à l'axe (10) du pivot (5, 29) dans la zone de la face intérieure du perçage (24) du rotor en examen (18), et en ce que les ouvertures de sortie des perçages essentiellement orthogonaux (7) présentent un angle de sortie différent de 90° par rapport à la surface du pivot dans les plans radiaux (8, 9).

7. Dispositif selon la revendication 6, caractérisé en ce que les perçages (7) contiennent un angle avec le plan radial (8, 9) concerné.

8. Dispositif selon la revendication 7, caractérisé en ce que le pivot (5, 29) étant disposé horizontalement, au moins l'un des perçages (7) est incliné en direction du plateau (11) par ses ouvertures de sortie.

9. Dispositif selon la revendication 6 et/ou 7, caractérisé en ce que les perçages sont courbés.

10. Dispositif selon l'une ou plusieurs des revendications précédentes, caractérisé en ce que le pivot (5, 29) présente plusieurs perçages secondaires (32), principalement axiaux.

11. Dispositif selon la revendication 10, caractérisé en ce que les perçages secondaires (32) sont disposés sur un cercle autour de l'axe (10) du pivot (5, 29) et en ce que les perçages secondaires (32) sont obliques par rapport à l'axe (10).

12. Dispositif selon la revendication 10, caractérisé en ce que les ouvertures de sortie des perçages secondaires (32) sont reliées dans un plan radial, avec des canaux radiaux.

13. Dispositif selon l'une ou plusieurs des revendications précédentes, caractérisé en ce que le plateau présente des canaux courbés dans la zone du diamètre du rotor (18) en examen.

14. Dispositif selon la revendication 13, caractérisé en ce que le plateau (11) porte un collet (41) destiné à recevoir les canaux courbés.

0 104 266

Fig. 1

Fig. 2

*Fig.1a*

*Fig.1b*

Fig. 3